# EUROPEAN PATENT SPECIFICATION

(11) **EP 4 042 032 B1**
(45) Date of publication and mention of the grant of the patent: **01.11.2023**
(21) Application number: 20793071.0
(22) Date of filing: 08.10.2020
(51) Int. Cl.: F16D 3/16, F16D 3/205, F16D 3/44

(54) **COUPLING**
KOPPLUNG
COUPLAGE

(30) Priority: 09.10.2019 GB 201914612; 10.12.2019 GB 201918106; 30.01.2020 GB 202001273; 30.01.2020 GB 202001274; 30.04.2020 GB 202006345
(43) Date of publication of application: 17.08.2022
(73) Proprietor: Punk Couplings Limited, Bristol BS1 6NL (GB)
(72) Inventor: PARKER, Simon, Bristol BS10 5SR (GB)
(86) International application number: PCT/GB2020/052491
(87) International publication number: WO 2021/069897

(56) References cited:
- WO-A1-2010/022932
- GB-A- 2 540 860
- US-A- 1 494 465
- US-A1- 2019 093 710

## Description

### Technical Field

The present invention relates to a coupling.

### Background Art

WO2015/087081 (Punk Couplings Limited) describes and claims a coupling having an inner member and an outer annular member and comprises:
one or more pairs of annular members, which may or may not include one or both the inner and outer annular members, each pair being a first annular member and a second annular member with a common axis and having a common centre on the axis;
the first annular member having an outer convex spherical periphery;
the second annular member having an inner spherical concave periphery in which the outer convex periphery of the first annular member is received;
the outer convex periphery and the inner concave peripheries being concentric about the centre and complementary to one another and co-acting with one another to transmit axial loads acting along the torsional axis between them;
one or a diametrically opposed pair of axles disposed radially of the common centre of the pair of annular members coupling the first and second annular members for transmitting torsional load from one of the annular members to the other; the first and second annular members being constrained by the axle(s) to be rotatable one relative to the other about the axle(s).

In some circumstances where substantial loads are generated in such a coupling, concern may arise over long-term wear on the surfaces of the complementary surfaces. Furthermore, losses through friction as a result of contact between the complementary surfaces impacts upon the efficiency of the coupling.

GB2 540 860 A (PUNK COUPLINGS LTD [GB]) 1 February 2017 and US 2019/093710 A1 (PARKER SIMON [GB]) 28 March 2019 (2019-03-28) illustrate other examples of such couplings. However, as the members are not maintained consistently in a spaced apart arrangement leading to wear on the surfaces of the members and in the axles.

US 1494465 (DUNN ALFRED W ET AL) 20 May 1924 (1924-05-20) describes a universal joint consisting of a pair of inner and outer shells, each having a concave socket, the inner shell fitting the socket of the outer shell, and an inner ball member fitting the inner shell. Such an arrangement was known at the time of GB2523768A and has high wear, is limited in its capability of coping with misaligned shafts, and irregular motion.

WO 2010/022932A1 (SGF GMBH & CO KG [DE]; ROTHE JOACHIM [DE]) 4 March 2010 (2010-03-04) describes a damping system for a universal joint in which a shaft nut is provided on a transmission output shaft, which has an external thread that corresponds to the internal thread of a union nut. In this way, the universal joint can be screwed to the transmission output shaft, creating a detachable connection between the universal joint and the transmission output shaft. The universal joint described is completely different from the coupling described in, for example, GB2523768A and it is not apparent how it could be made suitable for use in connection with the coupling of GB2523768A.

It is also known to utilise both the torsional damping properties of a rubber ring element to absorb the engine pulses when coupling misaligned shafts, but this is achieved by utilising the out of plane 'twist' capability inherent in rubber ring design. However, this creates an imbalance in the system, with extra forces that need to be overcome therefore inducing inefficiencies and unnecessary stresses and, therefore noise/vibrations in the system. An example of such a coupling is seen in EP0063022A (Dunlop Limited) published 20 Oct 1982. In consequence of the limitations of such a coupling, the angular misalignment is limited to 2° or 3°.

### Disclosure of Invention

In some circumstances where substantial loads are generated in such a coupling, concern may arise over long-term wear on the surfaces of the complementary surfaces. Furthermore, losses through friction as a result of contact between the complementary surfaces impacts upon the efficiency of the coupling.

The invention is set out in the accompanying claims.

In addition to reducing friction and wear, the invention has the additional benefit on ensuring maintenance of the concentricity of the pairs of annular members.

In contrast to WO2015/0087081 where the spherical surfaces of the first and second annular members carry most of any axial and radial load is carried by the spherical surfaces, in the present invention the axles also carry the axial and radial loads.

Couplings according to various embodiments of the present invention may be used for coupling any two structural elements that must be coupled with at least one rotational degree of freedom. Some examples are useful as structural static couplings, that is coupling an element to a fixed structure. Other examples are useful as rotational flexible couplings coupling two rotational elements. Couplings according to the invention, for example, may be used to couple angularly misaligned shafts, or as universal joints, constant velocity joints, couplings for coupling a drive shaft to a driven shaft, and as couplings for connecting to a pack and pinion or power steering actuator in a vehicle steering system.

### Brief Description of Drawings showing Examples of the Invention

Figure 1 is a side view of two couplings each according to the invention with their inner members sharing a common axle;
Figure 2 is a vertical section through the couplings of figure 1;
Figure 3 is a section though the couplings of figure 1, the section being orthogonal to that of figure 2;
Figure 4 is a section through one of the couplings of figure 1, the section being on the plane that is orthogonal to the sections of figures 2 and 3; and
Figure 5 shows two concentric couplings incorporating the invention;
Figure 6 is a perspective view of a misaligned coupling of figure 1 incorporating a pulse damper;
Figure 7 is a perspective view of the damping ring of figure 6;
Figure 8 is a section through the axis of the aligned coupling and pulse damper of figure 6;
Figure 9 is an exploded view of the pulse damper of figure 6 alone; and
Figure 10 is a vertical section of the pulse damper of figure 6 on a plane orthogonal to that of the section of figure 8.

### Description of examples

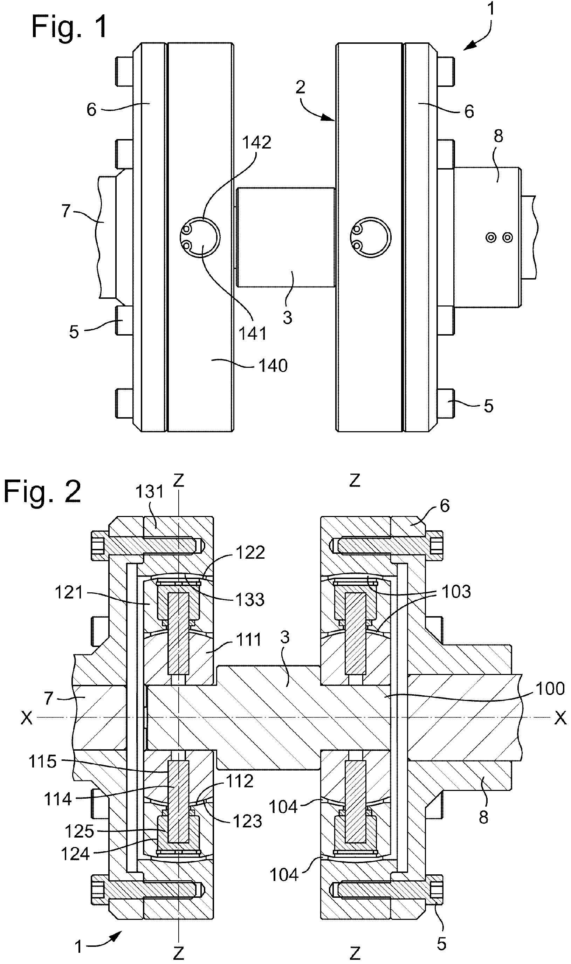

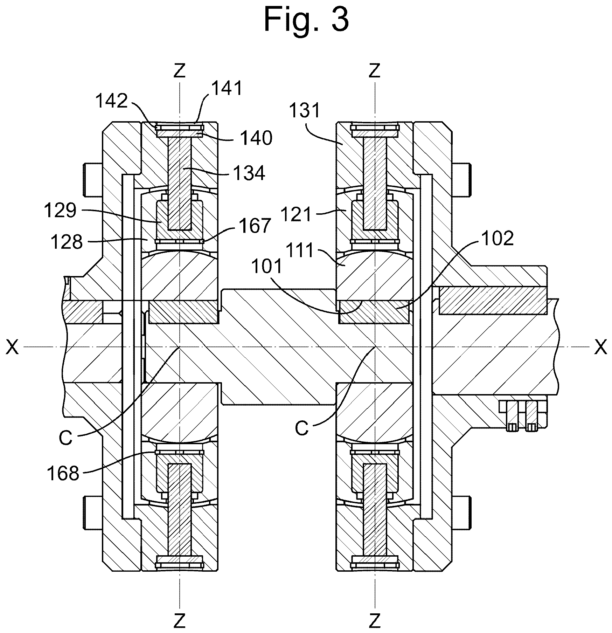

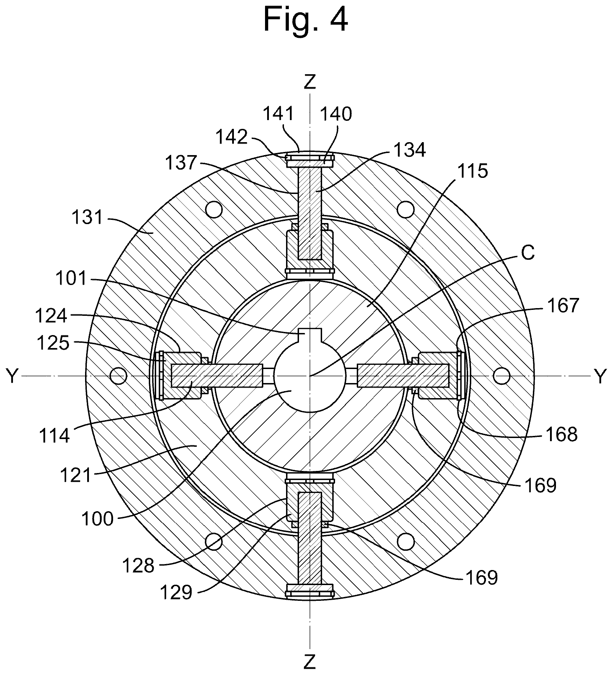

Figures 1 to 4 show two example couplings 1 and 2 of the invention link by a shaft 3 used as a Cardan shaft replacement.

Each coupling 1 and 2 comprises an inner annular member 111, an intermediate annular member 121, and an outer annular member 131. The inner member 111 is centred on the central axis X. The inner member 111 has a convex outer peripheral surface 112 which is convexly spherical centred on a point C on the central axis X.

The inner annular member 111 has a central aperture 100 to receive shaft 3. The central apertures 100 has a keyway 101 engaged by a corresponding key 102 on the shaft 3. Alternatively, the end of the shaft 3 may have splines to engage corresponding splines around the central aperture.

The intermediate annular member 121 has an inner concave peripheral surface 123 which is a spherical segment complementary to the convex outer peripheral surface 112 of the inner member 111. The concave surface 123 is also centred on point C. Diametrically opposed axles 114 extend radially of the axis X along second axes Y, which are orthogonal to the axis X, second axes Y pass through the point C

An axle 114 extends through the inner member 111 into the intermediate member and couples the inner member 111 to the intermediate annular member 121. The axle 114 constrains the intermediate annular member 121 to rotate with respect to the inner member 111 about the second axes Y.

The intermediate annular member 121 has an outer periphery 122 which is convexly spherical centred on point C. The outer annular member 131 has an inner concave peripheral surface 133 which is concavely spherical and centred on point C complementary to the convex outer periphery 122 of the intermediate member 121. A pair of diametrically opposed axles 134 extend radially of the central axis X on third axis Z, the third axis Z being orthogonal to the axis Y and axis X. The diametrically opposed axles 134 couple the intermediate annular member 121 to the outer annular member 131. Third axis Z passes through the same centre point C as the central axis X and second axes Y.

The axles 134 constrain intermediate annular member 121 and outer annular member 131 to rotate one relative to the other about axis Z. The axles 134 allow relative rotation of intermediate annular member 121 and outer annular member 131 independently of the relative rotation of the inner member 111 and intermediate annular member 121.

The axle 114 is supported in capped needle bearings 125 mounted in bores 124 in intermediate member 121 and fixed in a bore 115 in the inner member 111.

The axles 134 are fixed in bores 137 in the outer annular member 131 and are supported in capped needle bearings 129 fixed in bores 128 in the intermediate annular member 121.

The thicknesses of the members 111, 121 and 131 are chosen so that a small gap 103 is left between the convex and concave outer and inner peripheries 112 and 123 of the inner member 111 and the intermediate annular member 121; and similarly a small gap 103 is left between the convex and concave outer and inner peripheries 122 and 133 of the intermediate annular member 121 and the outer annular member 131 respectively. Therefore, the inner and outer surfaces of the members do not touch one another. However, should a failure occur the inner members and the intermediate annular member will be retained within the structure of the coupling 1.

Loading slots 104 (marked in figure 2) are provided to allow the inner member 111 to be inserted within the intermediate annular member 121 and the intermediate annular members 121 to be inserted in the outer annular members 131.

The capped needle bearings 125 and 129 have circlips 167 fitted around their periphery near their closed ends engaging with corresponding groves 168 in the surface of holes 124 and 128. The circlips 167 are used to retain the bearings 125 and 129 against the centrifugal forces generated when the coupling 1 spinning at high speed. Seals 169 are positioned to bridge the gap between the bearings 125 and 129 and the axles 114 and 134 to prevent ingress of contaminants into and the egress of lubricant from the bearings.

The axles 134, each have a flange 140 at their outer ends. The flanges 140 sit in seats 141 in the outer surface of the outer annular member 131. Circlips 142 engage with the inner periphery bores 137 against the flanges 140 to hold the axles 134 firmly in place.

The outer annular member 131 of coupling 1 has bolt holes in which bolts 5, passing through the end flange 6 of a drive or driven shaft 7, couple the shaft 7 to the outer annular member 131.

In the configuration shown in figures 1 to 5, the outer annular member 131 of coupling 2 also has bolt holes in which bolts 5, passing through the end flange 6 of a second drive or driven shaft 8, couple the shaft 8 to the outer annular member 131 of the second coupling 2.

As a further alternative rather than the inner member of one of the couplings being an annular member, it can be formed as male member having a boss with the shaft 3 extending from the boss into the central aperture of the other coupling.

As another alternative, the axles 114 and 134 are supported in bearings in the inner and outer members 111 and 131 respectively, rather than in the intermediate member 121.

In figures 1 to 5, a coupling of the invention is shown as being one of two linked by a common shaft to replace a Cardan coupling. But the coupling as shown as 1 or 2 can be used singly, with one of shafts 3 and 7 being the drive shaft and the other being the driven shaft. As a further alternative, rather than being bolted to a shaft, the other annular member may be connected to another rotatable device.

When two couplings 1 and 2 are connected as shown in figure 1 by a shaft 3, the rotational speed of one of the drive or driven shafts 7 and 8 will be the same as that of the other of the shafts 7 and 8 whatever the misalignment between shafts 7 and 8

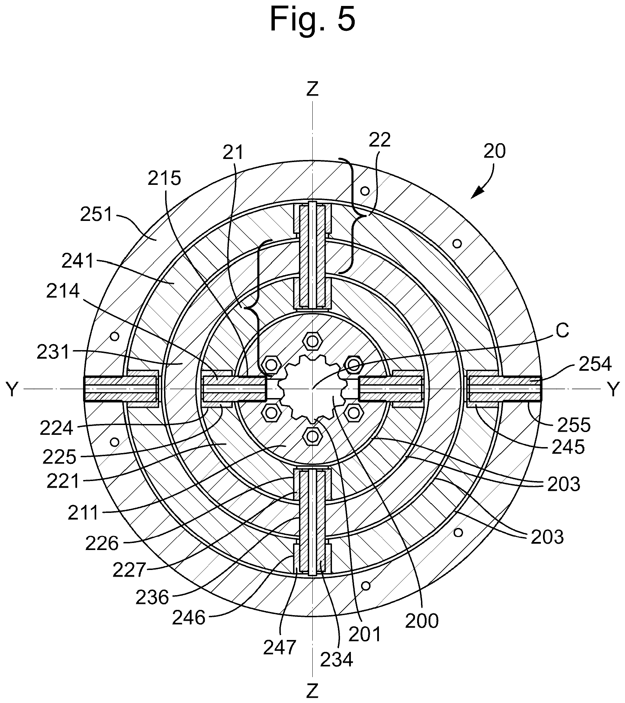

In figure 5, a double concentric joint 20 made up of two couplings 21 and 22 each incorporating the invention, one mounted inside the other, the outer annular member of the inner coupling 21 is the inner member of the outer coupling 22 and is hereafter called the common member 231. The couplings 21 and 22 have a common centre C.

Coupling 21 comprises an inner member 211, which, in this example, is annular, having a central bore 200 with splines 201 around the bore to receive a splined drive or driven shaft (not shown), an outer annular member - namely the common annular member 231 and an intermediate member 221.

Coupling 22 comprises an inner annular member - namely the common annular member 231, an intermediate member 241 and an outer annular member 251.

The inner member 211, in this example is annular, the intermediate members 221, 241 and the common annular member 231 comprise spherical segments. Each of the members (211, 221, 231, 241, 251) is disposed around a common central axis X and has a common centre C on the common axis X.

The outer annular member 251 has bolt holes on its side to receive bolts passing through an end flange of a shaft (not shown) to be coupled to the outer annular member.

The inner member has an outer convex spherical periphery 212 and the intermediate annular member 221 of coupling 21 has an inner spherical concave periphery 223 in which the outer convex periphery 212 of the inner member 211 is received.

The intermediate annular member 221 has an outer convex spherical periphery 222 and the common annular member 231 has an inner spherical concave periphery 233 in which the outer convex periphery 222 of the intermediate annular member 221 is received.

The common annular member 231 has an outer convex spherical periphery 232 and the intermediate annular member 241 of coupling 22 has an inner spherical concave periphery 243 in which the outer convex periphery 232 of the common annular member 231 is received.

The intermediate annular member 241 of the second coupling 22 has an outer convex spherical periphery 242 and the outer annular member 251 has an inner spherical concave periphery 253 in which the outer convex periphery 242 of the intermediate annular member 241 is received.

The outer convex peripheries (212, 222, 232, 242) and the inner concave peripheries (223, 233, 243, 253) are concentric about the centre C and are complementary to one another.

A pair of diametrically opposed axles 214 extend from opposed bores 215 in the inner member 211 into bearings 225 fixed in bores 224 in the intermediate annular member 221. The axis Y of the axles 214 is perpendicular to the common central axis X. The intermediate annular member 221 of coupling 21 is constrained to rotate about the inner member 211 about the second axis Y perpendicular to the common axis X.

A pair of diametrically opposed axles 234, whose common axis Z is perpendicular both to the common central axis X and the second axis Y, is fixed in opposed bores 236 in the common annular member 231 and mounted in bearings 227 and 247 fixed in bores 226 in the intermediate annular member 221 of coupling 21 and bores 246 in the intermediate annular member 241 of coupling 22. The common annular member 231 thus is constrained to rotate about the intermediate annular member 221 and the intermediate annular member 241 about the common annular member 231 on a third axis Z perpendicular to both the common axis X and the second axis Y.

A pair of diametrically opposed axles 254 extend from opposed bores 255 in the outer annular member 251 into bearings 245 fixed in bores 244 in the intermediate fourth annular member 241. The axis of the axles 254 is aligned with the second axis Y perpendicular to the common central axis X. The outer annular member 251 thus is constrained to rotate about the intermediate annular member 241 about the second axis Y and perpendicular to the common axis X.

The bearings 225, 245, 227, 247 can be plain bearings or capped roller needle bearings.

The dimensions of the members 211, 221, 231, 241 and 251 and axles 214, 234 and 254 are chosen to provide a small gap 203 between each convex outer periphery and each concave inner periphery. The gaps 203 between the members and concentricity of the members is maintained by the ends of the axles 214 and 254 being fixed by an interference fit in bores 215 and 255 respectively in inner and outer members 211 and 251 and supported by bearings 225 and 245 in the intermediate annular members 221 and 241, and also by axles 234 being fixed in bores 236 in the common annular member 234 by having an interfering fit therein and at either end of the axles by bearings 227 and 247 in the intermediate members 221 and 241. The axles and bearings can also be retained by circlips, snap rings, pins, or bolted caps.

The members 211, 221, 231 and 241 are loaded in turn within the members 221, 231, 241 and 251 using opposed loading slots 202 by inserting in a direction parallel to the common central axis, then rotating the smaller member into position. The axles are then located in position.

The common annular member 231 transmits rotational motion and torque from one coupling 21 to the other 22 or vice-versa.

The coupling of figure 5 is a female coupling in that any connecting shaft is inserted into the central aperture 200, with connection made to the splines 201. By replacing annular member 211 with a boss having a shaft extending laterally from the boss, connection made to an input or output externally.

In all the examples, the appropriate width of the gaps 103 and 203 in all the examples is a matter of design for the intended application varies according to the intended use of the coupling, the speed of rotation, load profiles, and the materials used in the annular members. However, as a general rule, the gaps 103 or 203 would be 0.5% of the overall diameter of the coupling where the overall diameter is less than 100mm, and 1% of the overall diameter for couplings 100mm in diameter or more.

In the examples, Ideally, the inertial mass of the members reduces the further away from the central axis X, is the member. This can be done through choice of materials, adding holes to intermediate and outer members as required, and/or by making the intermediate members thinner than the inner members and the outer members in turn thinner that the intermediate members. This ensures that the inertial mass of the intermediate members and outer members is reduced by comparison with what they would have been had all the members been of the same material.

Further measures to reduce the inertial mass of rotating parts of the away from the central axis X include the axles 134 and 234 being of smaller diameter than axles 114 and 214, and axles 254 being of smaller diameter than axes 234 .

Couplings as described above may be made of any suitable material, although, in design regard should be taken of the desirability of reducing the inertial mass of members as distance from the central axis X increases.

If plain capped bearings are used, the surfaces may be of metal, e.g. high-performance steels, brass, bronze, aluminium, titanium etc. or of plastic, e.g. nylon, glass filled nylon, acetal, ABS, Delrin^{®}.

Metal annular members may be lubricated by conventional lubricants for example grease. Alternatively, dry lubricant surfaces such as plastic liners may be used. The choice of materials and lubricants depends on the intended use of the coupling.

In figures 1 to 5, as described, the outer peripheries of members 111 and 121, and of members 211, 221, 231, and 241 are convex spherical peripheries and the inner peripheries of members 121 and 131, and of 221, 231, 241, and 251 are concave spherical peripheries. As contact between the members can be avoided by having the gap 203 maintained by the axles between the members and if that gap is sufficiently large, the peripheries surfaces can be cylindrical; alternatively, the peripheries can be chamfered towards their edges. The axles 114 and 134, and 214, 234 and 254 maintaining the gaps also maintain the concentricity of the members of couplings.

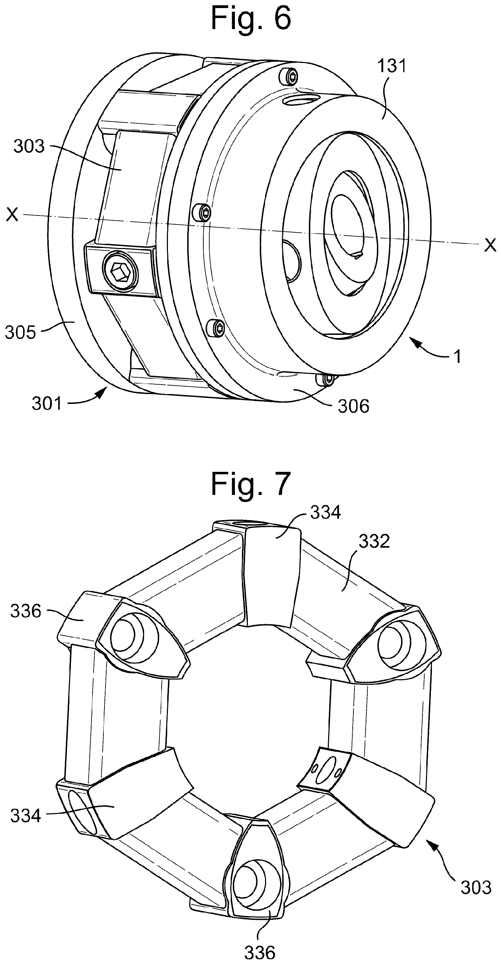

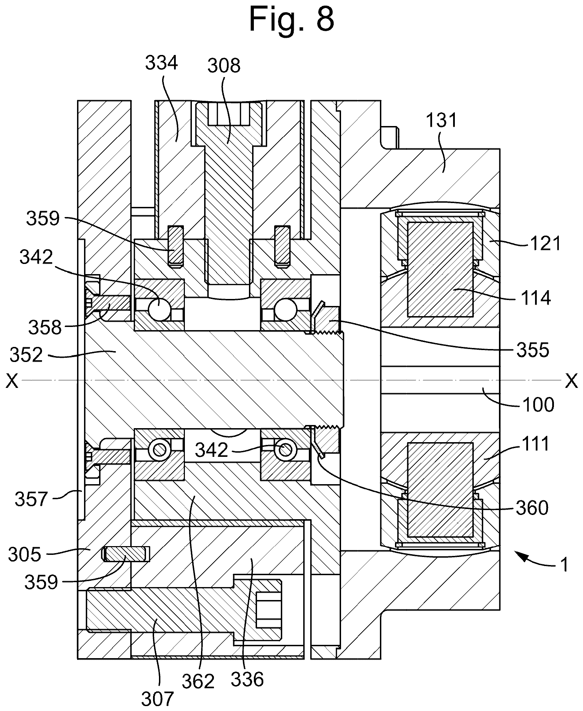

The coupling of figures 1 to 5 may be provided with a pulse damper as illustrated in figure 6 to 10.

The pulse damper 301 has a first end disc shaped plate 305 connectable to a rotatable input drive and a second disc shaped end plate 306 parallel to and opposed to the first end plate 305, both end plates are disposed around the central axis X.

The first end plate 305 has an axle 352 attached to it using a flange 357 and bolts 358. Axle 352 is co-axial with the central axis X and extends from the first end plate 305 towards the second end plate 306.

The second end plate 306 has a tube 362 extending from it co-axially around the axle 352 and forming a housing for a pair of bearings 342 between the tube 362 and the axle 352. The tube 362 is stepped allowing the bearings 342 to be seated. The bearings 342 are held in place at one end of tube 362 by an annular lock nut 355 having an internal screw thread 356 co-operating with an external screw thread 354 around the axle 352. A flared locking washer 360, is placed between the lock nut 355 and one of the pairs of bearings 342. At the other end of tube 362 the bearings are held in place by a stepped portion of axle 352.

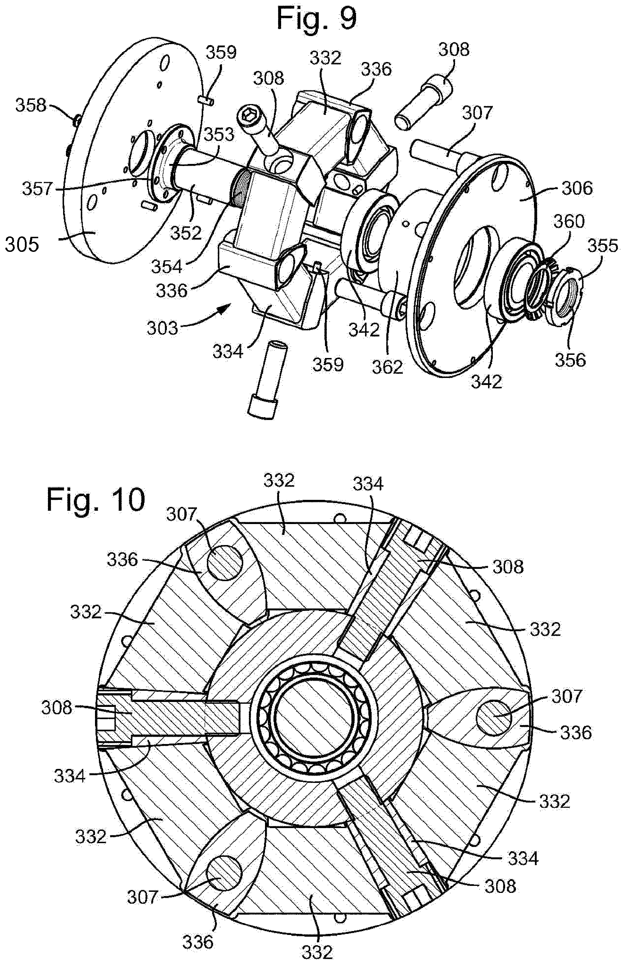

A damping ring 303 is disposed around the tube 362. The damping ring 303 is shown in more detail in figures 7 and 10. The damping ring 303 comprises an even number (six in this case) of wedge blocks 334 and 336, forming dividers between elastomeric members 332 disposed equidistantly from one another around the tube 362. The blocks 334 and 336 are separated from one another by elastomeric members 332. Alternate blocks 336 are bolted to the first end plate 305 by bolts 307. In the embodiment of figures 6 to 9, blocks 334 and 336 are wedged shape, with slightly curved side walls.

The blocks 334 between the blocks 336 bolted to the first end plate 305 are bolted with bolts 308 to the co-axial tube 362 (see figure 7). The bolts 308 through blocks 334 cause the elastomeric members 332 to bear against the co-axial tube 362. This arrangement forces the damping ring 303 to flex only around the central axis and not radially thus preventing imbalances. As can be seen in figures 6 to 9, the wedge blocks 334 have curved sides adjoining the resilient members the curvature of the sides increasing towards axial tube. This arrangement imposing greater pressure on the resilient members towards their edges ensuring good contact with axial tube.

The compliant connecting elastomeric sections 332 of damping ring 303 absorb the power pulses delivered from, for example, internal combustion engines by continuously and alternately compressing and extending in between the fixed blocks 334 and 336 during operation. Damping ring 3 is an over-moulded component with fixed blocks 334 and 336 restrained in place by the contiguous moulded elastomeric material, over-moulding also prevents overexpansion radially of the elastomeric material in use.

Pins 359 position and retain the blocks 334 in place with respect to the co-axial tube 362. Further pins 359 locate and assist in keeping the blocks 336 in place with respect to the first end plate 305.

Wedge blocks 332 are normally made of aluminium or aluminium alloy for lightness to minimise inertial forces in the flexible coupling

In the illustration, the second end plate 306 is an integral flange machined into the outer member 131 of one of the couplings 1 shown in figures 1 to 4, but it could equally well be bolted to the outer member 131 of coupling 2 shown in figures 1 to 4 or the outer member 351 of the coupling of figure 5. If the diameter of the damping means were small enough, the damping means could also be bolted to one of the inner members 111 of couplings 1 and 3 shown in figures 1 to 4 or the inner member 211 in figure 5.

## Claims

1. A coupling (1, 2, 21, 22) comprising: an inner member (111, 211, 231) and an outer annular member (131, 231, 251) and an intermediate annular member (121, 221, 241) which when aligned share a common axis (X) and have a common centre on the common axis (C); one or a diametrically opposed pair of first axles disposed radially (114, 214, 234) of the common centre coupling the inner member (111, 211, 231) and the intermediate annular member (121, 221, 241), and the inner member (121, 221, 231) and the intermediate annular member (121, 221, 241) being constrained by the first axles (114, 214, 234) to rotate, one with respect to the other about a second axis (Y) perpendicular to the common axis (X); the intermediate annular member (121, 221, 241) and the outer annular member (131, 231, 251) being constrained by the second axles (134, 234, 254) to rotate, one with respect to the other about a third axis (Z) perpendicular to both the common axis (X) and the second axis (Y); and **characterised in that** the inner member (111, 211, 231) , intermediate annular (121, 221, 241) and outer annular member (131, 231, 251) are spaced apart to leave a gap (103, 203) between each of the members and **in that** the gaps (103, 203) and the concentricity of the intermediate annular member (121, 221, 241) is maintained by the first axle or axles being fixed in the one or other of the inner (111, 211, 231) or outer member (131, 231, 251) and intermediate annular member (121, 221, 241) and supported in bearings (125, 129 225, 245, 227, 247) in the other of the inner or outer member and intermediate member.

2. A coupling as claimed in claim 1 **characterised in that** the inner member (111, 211, 231) has an outer convex periphery (112), the intermediate annular member (121, 221, 241) has an inner concave periphery (123) in which the outer convex periphery (112) of the inner member is received; the outer convex periphery (112) of the inner member and the inner concave periphery (123) of the intermediate annular member having the same common axis (X) when the coupling is aligned; the intermediate member (121, 221, 241) having an outer convex periphery (122), the outer annular member (131, 231, 251) having an inner concave periphery (133) in which the outer convex periphery of the intermediate member is received.

3. A coupling as claimed in claim 1 or 2 **characterised in that** the first axles (114, 214, 234) are fixed in holes in the inner member (111, 211, 231) and supported in a bearing mounted in the intermediate member (121, 221, 241) and that **in that** the second axles are fixed in a holes in the outer member and supported in a bearing (125, 129, 227, 245, 247) mounted in the intermediate member (121, 221, 241).

4. A coupling as claimed in any preceding claim **characterised in that** the second axle(s) (134) have flanges (140) engaging against the outer periphery of the outer member, with each of said axles (134) being supported in bearings (129) in the intermediate member.

5. A coupling according to any one of claims 1 to 4 in which an axle is supported in a bearing, **characterised in that** the bearing is held in place against centrifugal forces by an engagement means (167) engaging the bearing and the adjoining surface (168).

6. A coupling as claimed in any one of claims 3 to 7 1 to 5 **characterised in that** one or more axles have a flat end surface in a bearing and the bearing has an inner end face and **in that** the inner ned face of the bearing acts on the flat end of the axle.

7. A coupling as claimed in any one of claims 1 to 6 having a bearing supporting an axle, **characterised in that** the bearing is sealed with an O-ring between the axle and bearing.

8. A coupling as claimed in any preceding claim **characterised in that** it is one of two such couplings (1, 2) with the inner members (111) linked by a common shaft (3), and one outer member connected to a drive shaft and the outer member of the other coupling connected to a driven shaft.

9. A coupling as claimed in any one of claims 1 to 97 **characterised in that** it is one of two such couplings (21, 22) arranged concentrically with the annular the outer member (231) of the inner coupling (21) members being the inner member (231) of the outer coupling (22).

10. A coupling as claimed in any preceding claim **characterised in that** which the inertial mass of members decreases the further away from the central axis is the member.

11. A coupling as claimed in any preceding claim **characterised in that** the second axles have a smaller diameter than the first axles.

12. A coupling as claimed in claim 9 **characterised in that** the intermediate member (221) of the inner coupling (21) has the same inertial mass as the intermediate member of the outer coupling.

13. A coupling as claimed in any preceding claim **characterised in that** the coupling additionally comprises a pulse damper disposed are around the central axis (X), said pulse damper having damping means a first end plate (305) and a second end plate (306) parallel and are opposed to one another, the first end plate (305) being connected an input or output and the second end plate (306) to the outer annular member (131) , one of the said end plates (305) has an axle (352) centred on the central axis (X) extending therefrom towards the other of said end plates (306) which has a tube (362) extending therefrom around the axle (352) and forming a housing for a plurality of bearings (342) between the tube (362) and the axle (352), and a damping ring (303) comprising an even number of dividers (334, 336) disposed equidistantly from one another around the tube (362), the dividers (334, 336) having elastomeric material (332) between them; alternate dividers (336) being fixed to the first end plate from which the axle extends, the other dividers (334) being fixed to the co-axial tube (362).

## Patentansprüche

1. Kupplung (1, 2, 21, 22) umfassend: ein inneres Element (111, 211, 231) und ein äußeres ringförmiges Element (131, 231, 251) und ein ringförmiges Zwischenelement (121, 221, 241), die, wenn sie ausgerichtet sind, eine gemeinsame Achse (X) teilen und eine gemeinsame Mitte auf der gemeinsamen Achse (C) aufweisen; eine oder ein diametral gegenüberliegendes Paar erster Achsen, die radial (114, 214, 234) zu der gemeinsamen Mitte angeordnet sind und das innere Element (111, 211, 231) und das ringförmige Zwischenelement (121, 221, 241) koppeln, und wobei das innere Element (121, 221, 231) und das ringförmige Zwischenelement (121, 221, 241) durch die ersten Achsen (114, 214, 234) gezwungen werden, in Bezug auf die andere um eine zweite Achse (Y) senkrecht zu der gemeinsamen Achse (X) zu drehen, das ringförmige Zwischenelement (121, 221, 241) und das äußere ringförmige Element (131, 231, 251) durch die zweiten Achsen (134, 234, 254) dazu gezwungen werden, in Bezug aufeinander um eine dritte Achse (Z) zu drehen, die sowohl zu der gemeinsamen Achse (X) als auch zu der zweiten Achse (Y) senkrecht ist; und **dadurch gekennzeichnet, dass** das innere Element (111, 211, 231), das ringförmige Zwischenelement (121, 221, 241) und das äußere ringförmige Element (131, 231, 251) voneinander beabstandet sind, sodass zwischen jedem der Elemente ein Spalt (103, 203) verbleibt, und dass die Spalte (103, 203) und die Konzentrizität des ringförmigen Zwischenelements (121, 221, 241) durch die erste(n) Achse(n) aufrechterhalten wird, die in dem einen oder anderen des inneren (111, 211, 231) oder äußeren Elements (131, 231, 251) und des ringförmigen Zwischenelements (121, 221, 241) befestigt und in Lagern (125, 129, 225, 245, 227, 247) in dem anderen des inneren oder äußeren Elements und des Zwischenelements gelagert ist/sind.

2. Kupplung nach Anspruch 1, **dadurch gekennzeichnet, dass** das innere Element (111, 211, 231) einen äußeren konvexen Umfang (112) aufweist, das ringförmige Zwischenelement (121, 221, 241) einen inneren konkaven Umfang (123) aufweist, in dem der äußere konvexe Umfang (112) des inneren Elements aufgenommen ist; wobei der äußere konvexe Umfang (112) des inneren Elements und der innere konkave Umfang (123) des ringförmigen Zwischenelements dieselbe gemeinsame Achse (X) aufweisen, wenn die Kupplung ausgerichtet ist; wobei das Zwischenelement (121, 221, 241) einen äußeren konvexen Umfang (122) aufweist, wobei das äußere ringförmige Element (131, 231, 251) einen inneren konkaven Umfang (133) aufweist, in dem der äußere konvexe Umfang des Zwischenelements aufgenommen ist.

3. Kupplung nach Anspruch 1 oder 2, **dadurch gekennzeichnet, dass** die ersten Achsen (114, 214, 234) in Löchern in dem inneren Element (111, 211, 231) befestigt und in einem Lager gelagert sind, das in dem Zwischenelement (121, 221, 241) montiert ist, und dass die zweiten Achsen in Löchern in dem äußeren Element befestigt und in einem Lager (125, 129, 227, 245, 247) gelagert sind, das in dem Zwischenelement (121, 221, 241) montiert ist.

4. Kupplung nach einem vorherigen Anspruch, **dadurch gekennzeichnet, dass** die zweite(n) Achse(n) (134) Flansche (140) aufweist (aufweisen), die den äußeren Umfang des äußeren Elements eingreifen, wobei jede der Achsen (134) in Lagern (129) in dem Zwischenelement gelagert ist.

5. Kupplung nach einem der Ansprüche 1 bis 4, wobei eine Achse in einem Lager gelagert ist, **dadurch gekennzeichnet, dass** das Lager durch eine Eingriffseinrichtung (167), die in das Lager und die angrenzende Fläche (168) eingreift, gegen Fliehkräfte festgehalten wird.

6. Kupplung nach einem der Ansprüche 3 bis 7 1 bis 5, **dadurch gekennzeichnet, dass** eine oder mehrere Achsen eine ebene Endfläche in einem Lager aufweisen und das Lager eine innere Endfläche aufweist und dass die innere Endfläche des Lagers auf das ebene Ende der Achse wirkt.

7. Kupplung nach einem der Ansprüche 1 bis 6, die ein Lager aufweist, das eine Achse trägt, **dadurch gekennzeichnet, dass** das Lager mit einem O-Ring zwischen der Achse und dem Lager abgedichtet ist.

8. Kupplung nach einem vorherigen Anspruch, **dadurch gekennzeichnet, dass** sie eine von zwei solchen Kupplungen (1, 2) ist, wobei die inneren Elemente (111) durch eine gemeinsame Welle (3) verbunden sind und ein äußeres Element mit einer Antriebswelle und das äußere Element der anderen Kupplung mit einer Abtriebswelle verbunden ist.

9. Kupplung nach einem der Ansprüche 1 bis 97, **dadurch gekennzeichnet, dass** sie eine von zwei solchen Kupplungen (21, 22) ist, die konzentrisch angeordnet sind, wobei das ringförmige das äußere Element (231) der inneren Kupplungselemente (21) das innere Element (231) der äußeren Kupplung (22) ist.

10. Kupplung nach einem vorherigen Anspruch, **dadurch gekennzeichnet, dass** die Trägheitsmasse der Elemente abnimmt, je weiter das Element von der Mittelachse entfernt ist.

11. Kupplung nach einem vorherigen Anspruch, **dadurch gekennzeichnet, dass** die zweiten Achsen einen kleineren Durchmesser aufweisen als die ersten Achsen.

12. Kupplung nach Anspruch 9, **dadurch gekennzeichnet, dass** das Zwischenelement (221) der inneren Kupplung (21) die gleiche Trägheitsmasse aufweist wie das Zwischenelement der äußeren Kupplung.

13. Kupplung nach einem vorherigen Anspruch, **dadurch gekennzeichnet, dass** die Kupplung zusätzlich einen Impulsdämpfer umfasst, der um die Mittelachse (X) angeordnet ist, wobei der Impulsdämpfer eine Dämpfungseinrichtung aufweist, eine erste Endplatte (305) und eine zweite Endplatte (306) parallel zueinander und einander gegenüberliegend angeordnet sind, wobei die erste Endplatte (305) mit einem Eingang oder Ausgang und die zweite Endplatte (306) mit dem äußeren ringförmigen Element (131) verbunden ist, eine der Endplatten (305) eine Achse (352) aufweist, die auf der Mittelachse (X) zentriert ist und sich von dieser zu der anderen der Endplatten (306) erstreckt, die ein Rohr (362) aufweist, das sich von dieser um die Achse (352) erstreckt und ein Gehäuse für eine Vielzahl von Lagern (342) zwischen dem Rohr (362) und der Achse (352) bildet, und einen Dämpfungsring (303), umfassend eine gerade Anzahl von Teilern (334, 336), die in gleichem Abstand voneinander um das Rohr (362) angeordnet sind, wobei die Teiler (334, 336) untereinander elastomeres Material (332) aufweisen; wobei abwechselnd Teiler (336) an der ersten Endplatte befestigt ist, von der sich die Achse erstreckt, und die anderen Teiler (334) an dem koaxialen Rohr (362) befestigt sind.

## Revendications

1. Accouplement (1, 2, 21, 22) comprenant : un élément interne (111, 211, 231) et un élément annulaire externe (131, 231, 251) et un élément annulaire intermédiaire (121, 221, 241) qui, lorsqu'ils sont alignés partagent un axe commun (X) et comportent un centre commun sur l'axe commun (C) ; un ou une paire diamétralement opposée de premiers axes disposés radialement (114, 214, 234) par rapport au centre commun accouplant l'élément interne (111, 211, 231) et l'élément annulaire intermédiaire (121, 221, 241), et l'élément interne (121, 221, 231) et l'élément annulaire intermédiaire (121, 221, 241) étant contraints par les premiers axes (114, 214, 234) à tourner l'un par rapport à l'autre autour d'un second axe (Y) perpendiculaire à l'axe commun (X) ; l'élément annulaire intermédiaire (121, 221, 241) et l'élément annulaire externe (131, 231, 251) étant contraints par les seconds axes (134, 234, 254) à tourner, l'un par rapport à l'autre autour d'un troisième axe (Z) perpendiculaire à la fois à l'axe commun (X) et au second axe (Y) ; et **caractérisé en ce que** l'élément interne (111, 211, 231), l'élément annulaire intermédiaire (121, 221, 241) et l'élément annulaire externe (131, 231, 251) sont espacés pour laisser un espace (103, 203) entre chacun des éléments et **en ce que** les espaces (103, 203) et la concentricité de l'élément annulaire intermédiaire (121, 221, 241) sont maintenus par le ou les premiers axes étant fixés dans l'un ou l'autre de l'élément interne (111, 211, 231) ou l'élément externe (131, 231, 251) et l'élément annulaire intermédiaire (121, 221, 241) et supportés dans des roulements (125, 129, 225, 245, 227, 247) dans l'autre de l'élément interne ou externe et l'élément intermédiaire.

2. Accouplement selon la revendication 1, **caractérisé en ce que** l'élément interne (111, 211, 231) comporte une périphérie externe convexe (112), l'élément annulaire intermédiaire (121, 221, 241) comporte une périphérie interne concave (123) dans laquelle la périphérie externe convexe (112) de l'élément interne est reçue ; la périphérie externe convexe (112) de l'élément interne et la périphérie interne concave (123) de l'élément annulaire intermédiaire comportant le même axe commun (X) lorsque l'accouplement est aligné ; l'élément intermédiaire (121, 221, 241) comportant une périphérie externe convexe (122), l'élément annulaire externe (131, 231, 251) comportant une périphérie interne concave (133) dans laquelle la périphérie externe convexe de l'élément intermédiaire est reçue.

3. Accouplement selon la revendication 1 ou 2, **caractérisé en ce que** les premiers axes (114, 214, 234) sont fixés dans des trous dans l'élément interne (111, 211, 231) et supportés dans un roulement monté dans l'élément intermédiaire (121, 221, 241) et **en ce que** les seconds axes sont fixés dans des trous dans l'élément externe et supportés dans un roulement (125, 129, 227, 245, 247) monté dans l'élément intermédiaire (121, 221, 241).

4. Accouplement selon l'une quelconque des revendications précédentes, **caractérisé en ce que** le ou les seconds axe(s) (134) comportent des brides (140) venant en prise contre la périphérie externe de l'élément externe, chacun desdits axes (134) étant supporté dans des roulements (129) dans l'élément intermédiaire.

5. Accouplement selon l'une quelconque des revendications 1 à 4, dans lequel un axe est supporté dans un roulement, **caractérisé en ce que** le roulement est maintenu en place contre les forces centrifuges par un moyen d'engagement (167) mettant en prise le roulement et la surface adjacente (168).

6. Accouplement selon l'une quelconque des revendications 3 à 7 1 à 5, **caractérisé en ce qu'**un ou plusieurs axes comportent une surface d'extrémité plate dans un roulement et le roulement comporte une face d'extrémité interne et **en ce que** la face d'extrémité interne du roulement agit sur l'extrémité plate de l'axe.

7. Accouplement selon l'une quelconque des revendications 1 à 6, comportant un roulement supportant un axe, **caractérisé en ce que** le roulement est scellé avec un joint torique entre l'axe et le roulement.

8. Accouplement selon l'une quelconque des revendications précédentes, **caractérisé en ce qu'**il s'agit de l'un de deux tels accouplements (1,2) dont les éléments internes (111) sont reliés par un arbre commun (3), et un élément externe connecté à un arbre d'entraînement et l'élément externe de l'autre accouplement connecté à un arbre mené.

9. Accouplement selon l'une quelconque des revendications 1 à 97, **caractérisé en ce qu'**il s'agit de l'un de deux tels accouplements (21, 22) disposés de manière concentrique avec l'anneau, l'élément externe (231) de l'accouplement interne (21) éléments étant l'élément interne (231) de l'accouplement externe (22).

10. Accouplement selon l'une quelconque des revendications précédentes, **caractérisé en ce que** la masse inertielle des éléments diminue à mesure que l'élément s'éloigne de l'axe central.

11. Accouplement selon l'une quelconque des revendications précédentes, **caractérisé en ce que** les seconds axes comportent un diamètre plus petit que les premiers axes.

12. Accouplement selon la revendication 9, **caractérisé en ce que** l'élément intermédiaire (221) de l'accouplement interne (21) comporte la même masse inertielle que l'élément intermédiaire de l'accouplement externe.

13. Accouplement selon l'une quelconque des revendications précédentes, **caractérisé en ce que** l'accouplement comprend en outre un amortisseur d'impulsions disposé autour de l'axe central (X), ledit amortisseur d'impulsions comportant des moyens d'amortissement, une première plaque d'extrémité (305) et une seconde plaque d'extrémité (306) parallèles et opposées l'une à l'autre, la première plaque d'extrémité (305) étant connectée à une entrée ou une sortie et la seconde plaque d'extrémité (306) à l'élément annulaire externe (131), l'une desdites plaques d'extrémité (305) comporte un axe (352) centré sur l'axe central (X) s'étendant depuis celle-ci vers l'autre desdites plaques d'extrémité (306) qui comporte un tube (362) s'étendant à partir de celle-ci autour de l'axe (352) et formant un boîtier pour une pluralité de roulements (342) entre le tube (362) et l'axe (352), et un anneau d'amortissement (303) comprenant un nombre pair de diviseurs (334, 336) disposés à équidistance les uns des autres autour du tube (362), les diviseurs (334, 336) comportant un matériau élastomère (332) entre eux ; des diviseurs alternés (336) étant fixés à la première plaque d'extrémité à partir de laquelle s'étend l'axe, les autres diviseurs (334) étant fixés au tube coaxial (362).
